(19) Europäisches Patentamt
European Patent Office
Office européen des brevets

(11) EP 2 955 538 A1

(12) **EUROPÄISCHE PATENTANMELDUNG**

(43) Veröffentlichungstag:
16.12.2015  Patentblatt 2015/51

(51) Int Cl.:
*G01S 7/02* (2006.01)     *G01S 13/84* (2006.01)

(21) Anmeldenummer: 14172263.7

(22) Anmeldetag: 13.06.2014

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Mayer, Lukas Walter
1020 Wien (AT)**

• **Spandl, Manfred
1180 Wien (AT)**
• **Schiefer, Martin
3100 St. Pölten (AT)**

(74) Vertreter: **Maier, Daniel Oliver et al
Siemens AG
Postfach 22 16 34
80506 München (DE)**

(54) **Verfahren und Vorrichtung zur schmalbandigen Entfernungsmessung**

(57)    Die Erfindung betrifft ein Verfahren zur schmalbandigen Messung einer Entfernung (d) zu einem Transponder (1), wobei zumindest eine Sendeantenne (4), bei welcher zumindest zwei unterschiedliche Sendepolarisationen ($p$) eingestellt werden können, und zumindest eine Empfangsantenne (5), welche unterschiedliche Polarisationen erkennen kann, verwendet werden. Zur Lokalisierung von Backscatter- bzw. RFID-Transpondern wird eine Phasenverschiebung ($\Delta\varphi$) zwischen einem Sendesignal (10,11) und einem nach einer modulierten Reflektion an einem Transponder (1) erhaltenen Empfangssignal (12,13) mit messtechnisch bestimmter Polarisation gemessen, wobei N schmalbandige Einzelmessungen mit N unterschiedlichen Sendepolarisationen ($p$) zur Bestimmung der Phasenverschiebung ($\Delta\varphi(p, f)$) für jede Sendepolarisation ($p$) zwischen Sende-(10,11) und Empfangssignal (12,13) bei mindestens zwei verschiedenen Frequenzen ($f_1, f_2, f_i, f_j$) des schmalbandigen Frequenzbandes durchgeführt werden und die Entfernung ($d(p, f_i, f_j)$) mit Hilfe einer aus der Phasenverschiebung ($\Delta\varphi(p, f)$) bestimmten Signallaufzeit ($\tau_\varphi(p, f_i, f_j)$) und der Signalgeschwindigkeit (c) für jede der N unterschiedlichen Sendepolarisationen ($p$) und jeder der möglichen Frequenzkombinationen ($f_i, f_j$) berechnet wird, wobei eine Mittelung der einzelnen Entfernungen ($d(p, f_i, f_j)$) die zu messende Entfernung (d) ergibt.

FIG 1

**Beschreibung**

GEBIET DER ERFINDUNG

Die Erfindung betrifft ein Verfahren zur schmalbandigen Messung einer Entfernung zu einem Transponder, wobei zumindest eine Sendeantenne, bei welcher zumindest zwei unterschiedliche Sendepolarisationen eingestellt werden können, und zumindest eine Empfangsantenne, welche unterschiedliche Polarisationen erkennen kann, verwendet werden. Darüber hinaus offenbart die vorliegende Anmeldung eine zugehörige Vorrichtung zur schmalbandigen Messung der Entfernung zu einem Transponder, wobei diese Vorrichtung zumindest eine Sendeantenne zum Aussenden eines Sendesignals mit zumindest zwei unterschiedlichen Sendepolarisationen und zumindest eine Empfangsantenne zur Detektion eines polarisierten Empfangssignals umfasst, wobei solche Vorrichtungen auch als Lesegerät bezeichnet werden.

STAND DER TECHNIK

Die Lokalisierung von Backscatter-Transpondern bzw. RFID-Transpondern (Radio-Frequency Identification-Transpondern, bestehen in der Regel aus einem Chip und einer Antenne) ist für viele industrielle Anwendungen von großer Bedeutung. Dabei handelt es sich um sogenannte Sender-Empfänger-Systeme zum automatischen und berührungslosen Identifizieren und Lokalisieren von Objekten mit Hilfe von Radiowellen.

Ein RFID-System besteht üblicherweise aus zumindest einem Transponder, welcher einen kennzeichnenden Code enthält, und einem Lesegerät zum Auslesen der empfangenen Signale.

Ein Verbindungsaufbau zwischen dem Lesegerät und dem Transponder erfolgt durch vom Lesegerät erzeugte - hier nicht relevante magnetische Wechselfelder geringer Reichweite oder - hochfrequente Radiowellen. Damit werden nicht nur Daten übertragen, sondern es kann auch der Transponder mit Energie versorgt werden. Üblicherweise werden, falls größere Reichweiten erzielt werden sollen und die Kosten der Transponder nicht sehr kritisch sind, vorzugsweise anstelle von passiven Transpondern aktive Transponder mit eigener Stromversorgung eingesetzt.

Im Detail wird im Lesegerät die Phasenverschiebung zwischen einem gesendeten und nach der modulierten Reflexion am Transponder wieder empfangenen Signal bestimmt. Der Transponder moduliert das Signal, das er reflektiert. Ohne Modulation könnte das Lesegerät das Signal des Transponders nicht von statischen Reflexionen im Raum unterscheiden. Während der Kommunikation moduliert der Transponder das ankommende Signal, und diese Modulation reicht für das Lesegerät aus, um genau das Signal des Transponders zu isolieren. Hierbei stellt ein grundlegendes Problem die bei vielen Backscatter- bzw. RFID-Systemen üblichen erlaubten Bandbreiten dar, in denen die standardisierten nutzbaren Kanäle liegen. Wegen der in stark reflektierenden Umgebungen vorhandenen Mehrwegausbreitungen können Betrag und Phase der Übertragungsfunktion dann auf schmale Frequenzbänder beschränkte ungünstige Verläufe aufweisen, die zu unakzeptablen Fehlern bei der Entfernungsmessung führen, wenn der vom Backscatter-System genutzte Kanal in einem derartigen Frequenzband liegt. Wesentlich dabei ist der Frequenzbereich, in dem die einzelnen Kanäle zu liegen kommen.

Somit muss zumeist das Lesegerät selbst entscheiden, ob sich der betrachtete Transponder innerhalb oder außerhalb eines bestimmten abgegrenzten Bereichs, dem sogenannten Lokalisierungsbereich, befindet, wodurch gegebenenfalls Probleme bei der sicheren Zuordnung der Transponder zum jeweiligen Lokalisierungsbereich auftreten können. Um eine sichere Zuordnung der Transponder zum jeweiligen Lokalisierungsbereich zu gewährleisten, werden üblicherweise kleine Sendeleistungen, Abschirmungen zwischen den zu unterscheidenden Lokalisierungsbereiche oder große Abstände zwischen den einzelnen Lokalisierungsbereichen bereitgestellt. Sonst würden bei Entfernungsmessungen gemäß dem Stand der Technik häufig unakzeptable Fehler in stark reflektierenden Umgebungen auftreten.

DARSTELLUNG DER ERFINDUNG

Es ist daher eine Aufgabe der Erfindung, eine Vorrichtung und ein Verfahren zu schaffen, durch welche Transponder zuverlässiger lokalisiert oder zumindest einem bestimmten Lokalisierungsbereich zugeordnet werden können.

Diese Aufgabe wird durch ein Verfahren nach Anspruch 1 gelöst, indem eine Phasenverschiebung zwischen einem Sendesignal und einem nach einer modulierten Reflexion an einem Transponder erhaltenen Empfangssignal mit messtechnisch bestimmter Polarisation gemessen werden kann, wobei $N$ schmalbandige Einzelmessungen mit $N$ unterschiedlichen Sendepolarisationen zur Bestimmung der Phasenverschiebung für jede Sendepolarisation zwischen Sende- und Empfangssignal bei mindestens zwei verschiedenen Frequenzen des schmalbandigen Frequenzbandes durchgeführt werden und die Entfernung mit Hilfe einer aus der Phasenverschiebung bestimmten Signallaufzeit und der Signalgeschwindigkeit für jede der $N$ unterschiedlichen Sendepolarisationen und jede der möglichen Frequenzkombinationen berechnet wird, wobei eine Mittelung der einzelnen Entfernungen die zu messende Entfernung ergibt.

Unter einer schmalbandigen Einzelmessung ist eine Messung über einen schmalbandigen Übertragungskanal zu verstehen. Dabei ist die Bandbreite des Übertragungskanals so gering, dass der Betragsfrequenzgang nahezu als konstant angenommen werden kann, was einer im gesamten Band konstanten Gruppenlaufzeit (Signallaufzeit) entspricht. Eine Entzerrung ist für RFID Anwendungen nicht notwendig und auch nicht möglich, da die Symboldauern in der Regel viel länger als die Laufzeitvariationen im Kanal sind.

Im Detail wird eine Entfernungsmessung durch $N$ schmalbandige Einzelmessungen mit $N$ unterschiedlichen Sendepolarisationen realisiert, wozu für jede Sendepolarisation die Phasenverschiebung zwischen Sende- und Empfangssignal bei mindestens zwei verschiedenen Frequenzen des zur Verfügung stehenden schmalbandigen Frequenzbandes bestimmt wird. Dabei werden mit Hilfe der Phasenverschiebung und der Signalgeschwindigkeit, bei welcher es sich bei Radiowellen um die Lichtgeschwindigkeit handelt, für jede Sendepolarisation die Signallaufzeit und daraus die Entfernung berechnet. Hierbei ist anzumerken, dass bei räumlich eng benachbarten Sende- und Empfangsantennen oder einer kombinierten Sende- und Empfangsantenne die Entfernung üblicherweise der halben Signallaufzeit entspricht.

Um dies zu ermöglichen, umfasst die zugehörige Vorrichtung eine Auswerteeinheit zur Auswertung von Sende- und Empfangssignalen, mit welcher eine Phasenverschiebung zwischen einem Sendesignal und einem nach einer Reflektion an einem Transponder erhaltenen Empfangssignal mit messtechnisch bestimmter Polarisation gemessen werden kann, wobei $N$ schmalbandige Einzelmessungen mit $N$ unterschiedlichen Sendepolarisationen zur Bestimmung der Phasenverschiebung für jede Sendepolarisation zwischen Sende- und Empfangssignal bei mindestens zwei verschiedenen Frequenzen des schmalbandigen Frequenzbandes durchgeführt werden können und die Entfernung mit Hilfe einer aus der Phasenverschiebung bestimmten Signallaufzeit und der Signalgeschwindigkeit für jede der $N$ unterschiedlichen Sendepolarisationen berechnet werden kann, wobei eine Mittelung der einzelnen Entfernungen die zu messende Entfernung ergibt.

Dabei umfasst die Vorrichtung vorzugsweise einen Oszillator zur Signalerzeugung für eine Polarisationssteuerung, welche an die Sendeantenne mit zumindest einem Vertikal- und/oder zumindest einem Horizontaleingang angeschlossen ist, und eine mit der Empfangsantenne mit zumindest einem Vertikalund/oder zumindest einem Horizontalausgang verbundene Empfangseinheit, welche in einer bevorzugten Ausführungsform als Umschalteinheit realisiert sein kann, angeschlossen ist.

Dadurch ist es möglich, dass in einer bevorzugten Ausführungsform für jede Entfernungsmessung das Signal an zumindest einem Vertikal- und/oder zumindest einem Horizontalausgang der Empfangsantenne verwendet wird, wobei bevorzugter Weise das leistungsstärkste der beiden Signale herangezogen wird. Somit verfügt die Empfangsantenne zumindest über je einen Ausgang für eine Vertikal- und eine Horizontalpolarisation, wobei beispielsweise bei einer polarisationsagilen Sendeantenne jede beliebige Sendepolarisation eingestellt werden kann. Hierbei ist anzumerken, dass mit einer einfachen Antenne, bei welcher man aus einem Set von vordefinierten Polarisationsarten, jedoch zumindest zwei Sendepolarisationen, auswählen kann, den selben Effekt erzielt, wodurch gegebenenfalls in Abhängigkeit von der jeweiligen Anwendung unnötige Kosten gespart werden können.

Dabei wird in einer bevorzugten Ausführungsform die tatsächliche bzw. endgültige Entfernung durch Mittelung und Gewichtung mit Hilfe einer Gewichtungsfunktion der N Entfernungsmessungen bestimmt, wobei verschiedene bevorzugte Alternativen für diesen Standardfall zur Verfügung stehen:

.) Die Gewichtungsfunktion ist von einer Empfangsleistung, welche aufgrund einer eingestellten Sendepolarisation erzielt wird, abhängig.

.) Die Gewichtungsfunktion ist von einer Übereinstimmung eines messtechnisch ermittelten Empfangspolarisationsmodus und eines von dem Transponder erwarteten Polarisationsmodus, abhängig.

Das Maß der Übereinstimmung kann beispielsweise durch Bildung einer Differenz, eines Quotienten oder mit Hilfe statistischer Verfahren, z.B. unter Verwendung des Medians, bestimmt werden. Unter Polarisationsmodus versteht man die Polarisationseigenschaften eines Signals, hier also etwa die Schwingungsrichtung zweier orthogonaler elektrischer Feldanteile und deren Phasenverschiebung zueinander.

Im Falle, dass mehr als zwei Frequenzen gemessen werden, so kann für jedes der $K$ Frequenzpaare bei jeder gesendeten Polarisation ein Entfernungswert ermittelt werden. Dabei wird in einer bevorzugten Ausführungsform die tatsächliche bzw. endgültige Entfernung durch Mittelung und Gewichtung mit Hilfe einer Gewichtungsfunktion der $K$ Entfernungsmessungen für jede der $N$ Sendepolarisationen bestimmt, wobei nachfolgende Alternativen zur Berechnung der Gewichtungsfunktion zur Verfügung stehen:

.) Die Gewichtungsfunktion ist von einer Übereinstimmung der Empfangsleistung, welche aufgrund der eingestellten $K$ Sendefrequenzen erzielt wird, abhängig. Das Maß der Übereinstimmung kann beispielsweise durch Bildung einer Differenz, eines Quotienten oder mit Hilfe statistischer Verfahren, z.B. unter Verwendung des Medians, bestimmt werden.

.) Die Gewichtungsfunktion ist von einer Übereinstimmung des messtechnisch ermittelten Empfangspolarisationsmodus, der aufgrund der eingestellten $K$ Sendefrequenzen erzielt wird, abhängig.

.) Die Gewichtungsfunktion ist von einer Übereinstimmung des messtechnisch ermittelten Entfernungswertes, der aufgrund der eingestellten $K$ Sendefrequenzen erzielt wird, abhängig. Das Maß der Übereinstimmung kann beispielsweise durch Bildung einer Differenz, eines Quotienten oder mit Hilfe statistischer Verfahren, z.B. unter Verwendung des Medians, bestimmt werden.

Dabei können die Gewichtungsfunktionen für den Standardfall und für den Fall, dass mehr als zwei Frequenzen gemessen werden, auch gemäß nachfolgenden Schritten ermittelt werden:

.) Die Gewichtungsfunktion resultiert aus einer Kombination der obig erläuterten Gewichtungsfunktionen.
.) Die Gewichtungsfunktion ist gleich 1 für alle Sendepolarisationen, es findet also eine einfache Mittelung statt.

Dabei werden die Werte einer oder mehrerer der oben aufgezählten Gewichtungsfunktionen auch dazu verwendet, um einen Konfidenzwert zu berechnen, der es erlaubt zu beurteilen, welche Genauigkeit bei der berechneten Entfernung zu erwarten ist. In Anordnungen, in denen sich Transponder und/oder Lesegeräte langsam, d.h. innerhalb der Zeitdauer einer Messperiode nur unwesentlich, bewegen, kann der Konfidenzwert dazu verwendet werden, um stark fehlerbehaftete Messungen zu streichen bzw. bei einer Sequenz aufeinanderfolgender Messperioden nur Messwerte mit hohen Konfidenzwerten für die Zuordnung eines Transponders zu einem Lokalisierungsbereich zu berücksichtigen.
Dabei ist ergänzend anzumerken, dass in Leseanordnungen, bei denen mit Transpondern gleichartig - im Sinne der Anbringung und Ausrichtung der Transponder - gekennzeichnete Objekte an gleicher Position vor dem Lesegerät positioniert werden können, die messtechnisch ermittelte Polarisation und/oder Leistung und/oder Phase der vom Transponder empfangenen Signale der $N$ Sendepolarisationen und $K$ Sendefrequenzen verwendet werden, um deren Abweichung von einer Referenzmessung zu bestimmen. Die Abweichung der Messung von der Referenzmessung kann beispielsweise durch einen quadratischen Mittelwert der Messgrößen beziffert werden. Daraus ergibt sich ein Maß für die Übereinstimmung der Messung und der Referenz anhand der eine Entscheidung getroffen werden kann, ob ein Transponder sich an oder zumindest nahe an der Referenzposition befindet. Aufgrund der bei Mehrwegausbreitung in Schmalbandsystemen typischen steilen Phasen-, Polarisations- und Leistungsänderungen können Transponder mit hoher Genauigkeit einer bekannten Raumposition zugeordnet werden. Falls dabei mehrere mit Transpondern gekennzeichnete Objekte erwartet werden, so können mehrere Referenzdatensätze zum Vergleich herangezogen werden.
Fakt ist, dass für jeden Signalpfad des Mehrwegesystems zwischen Lesegerät und Transponder die zum jeweiligen Pfad gehörenden Reflektoren einen charakteristischen, durch die Geometrie der Anordnung gegebenen Pfadkoeffizienten aufweisen. Dabei bewirkt die Verwendung einer unterschiedlichen Sendepolarisation, dass die Polarisation der über die einzelnen Pfade beim Transponder ankommenden Signale verschieden stark von der Polarisation der empfangenden Transponderantenne abweichen und damit verschieden stark zum empfangenen Gesamtsignal am Transponder beitragen, d.h. auch das vom Transponder wieder abgestrahlte Signal setzt sich aus den für die jeweilige Geometrie typischen sendepolarisationsabhängigen Komponenten zusammen. Die Polarisation des am Lesegerät empfangenen Signals ergibt sich aus der für die Dauer der Messung als unveränderlich angenommenen Transponderpolarisation und der Geometrie des Mehrwegesystems.
Somit ist die Übertragungsfunktion zwischen Sender und Empfänger eine Funktion der Frequenz und der Sendepolarisation, wobei die möglichen obig erläuterten Probleme bzw. ungünstigen Verläufe von Betrag und Phase mit der Sendepolarisation variieren.
Daraus ergibt sich der Vorteil, dass die Messreihe mit unterschiedlichen Sendepolarisationen bewirkt, dass ein bei einer bestimmten Sendepolarisation im Messfrequenzband liegender ungünstiger Betrags-/Phasenverlauf durch Messung bei anderen Polarisationen erkannt und kompensiert werden kann, wodurch zuverlässigere Schmalbandmessungen möglich sind.
In einer weiteren bevorzugten Ausführungsform sind die Sendeund/oder die Empfangsantenne ferner phasengesteuerte Gruppenantennen, bei welchen $M$ verschiedene Richtcharakteristiken eingestellt werden, wobei $N*M$ schmalbandige Einzelmessungen für $N$ unterschiedliche Sendepolarisationen und $M$ Richtcharakteristiken durchgeführt werden und für jede der $M$ Richtcharakteristiken und für jede der $N$ Sendepolarisationen die Phasenverschiebung zwischen Sende- und Empfangssignal bei mindestens zwei verschiedenen Frequenzen des schmalbandigen Frequenzbandes bestimmt wird und die Entfernung mit Hilfe einer aus den Phasenverschiebungen bestimmten Signallaufzeit (kann hier auch als Gruppenlaufzeit bezeichnet werden), und der Signalgeschwindigkeit für jede der $N*M$ unterschiedlichen Sendepolarisations- und Richtcharakteristik-Tupel berechnet wird, wobei vor Mittelung über $N$ unterschiedliche Sendepolarisationen eine Auswahl aus oder Mittelung über $M$ verschiedene Richtcharakteristiken durchgeführt wird, indem aus den $N*M$ Entfernungen $N$ Entfernungen ermittelt werden, wobei zur Ermittlung der Entfernung für jede Sendepolarisation die mit den $M$ Richtcharakteristiken ermittelten Entfernungen gemittelt werden.
Um dies zu ermöglichen umfasst die Vorrichtung ferner eine Polarisations- und Phasensteuerung zur Erstellung $M$ verschiedener Richtcharakteristiken.
Im Detail wird eine Entfernungsmessung durch $N*M$ schmalbandige Einzelmessungen mit $M$ verschiedenen Richtcharakteristiken bei *N* verschiedenen Sendepolarisationen durchgeführt. Dazu wird mit jeder der *M* Richtcharakteristiken und für jede der *N* Sendepolarisationen die Phasenverschiebung zwischen Sende- und Empfangssignal bei zumindest zwei verschiedenen Frequenzen des schmalbandigen Frequenzbandes bestimmt. Mit Hilfe der Signallaufzeit und der Lichtgeschwindigkeit für jede der *N*M* unterschiedlichen Sendepolarisations- und Richtcharakteristik-Tupel wird im Anschluss die Entfernung berechnet.

Es kann vorgesehen sein, dass aus *M* verschiedenen Richtcharakteristiken nur ein leistungsstärkstes Signal der Empfangsantenne verwendet, also ausgewählt, wird.

Zusätzlich oder alternativ können etwa für jede Messung die Signale an dem Vertikal- und dem Horizontalausgang der Empfangsantenne in geeigneter Weise, beispielsweise in Form des leistungsstärksten, polarisationsrichtig empfangenen Signals der Empfangsantenne, herangezogen werden.

Gemäß obiger Erläuterung werden aus den *N*M* Entfernungen *N* Entfernungen ermittelt, wobei - statt einer Auswahl des leistungsstärksten Signals aus M Richtcharakteristiken - für jede Sendepolarisation die mit den *M* Richtcharakteristiken ermittelten Entfernungen gemittelt und vorzugsweise auch gewichtet werden. Hierbei stehen zur Gewichtung verschiedene bevorzugte Alternativen zur Verfügung, welche den bereits oben besprochenen Gewichtungsfunktionen entsprechen, wobei anstelle der Verwendung von nur der Sendepolarisation nun auch die Richtcharakteristiken zur Gewichtung herangezogen werden:

.) Die Gewichtungsfunktion ist von einer Empfangsleistung, welche aufgrund einer eingestellten Sendepolarisation erzielt wird, und der Richtcharakteristik abhängig.

.) Die Gewichtungsfunktion ist von einer Übereinstimmung, eines messtechnisch ermittelten Empfangspolarisationsmodus und eines von dem Transponder erwarteten Polarisationsmodus abhängig.

Im Falle, dass mehr als zwei Frequenzen gemessen werden, so kann für jedes der *K* Frequenzpaare bei jeder gesendeten Polarisation ein Entfernungswert ermittelt werden. Dabei wird in einer bevorzugten Ausführungsform die tatsächliche bzw. endgültige Entfernung durch Mittelung und Gewichtung mit Hilfe einer Gewichtungsfunktion der *K* Entfernungsmessungen für jede der N Sendepolarisationen bestimmt, wobei nachfolgende Alternativen zur Berechnung der Gewichtungsfunktion zur Verfügung stehen:

.) Die Gewichtungsfunktion ist von einer Übereinstimmung der Empfangsleistung, welche aufgrund der eingestellten *K* Sendefrequenzen erzielt wird, abhängig.

.) Die Gewichtungsfunktion ist von einer Übereinstimmung des messtechnisch ermittelten Empfangspolarisationsmodus, der aufgrund der eingestellten *K* Sendefrequenzen erzielt wird, abhängig.

.) Die Gewichtungsfunktion ist von einer Übereinstimmung des messtechnisch ermittelten Entfernungswertes, der aufgrund der eingestellten *K* Sendefrequenzen erzielt wird, abhängig.

Dabei können die Gewichtungsfunktionen für den Standardfall und für den Fall, dass mehr als zwei Frequenzen gemessen werden, auch gemäß nachfolgenden Schritten ermittelt werden:

.) Die Gewichtungsfunktion resultiert aus einer Kombination der obig erläuterten Gewichtungsfunktionen.

.) Die Gewichtungsfunktion ist gleich 1 bei einer maximalen Empfangsleistung für die Sendepolarisation und die Richtcharakteristik.

Auch wenn eine Gewichtung nach einer der obigen Gewichtungsfunktionen durchgeführt wird, so wird die endgültige Entfernung durch eine Mittelung der N gemittelten Entfernungen für die einzelnen Sendepolarisationen ermittelt.

Daraus ergibt sich der Vorteil, dass schmalbandige Messungen mit variierender Sendepolarisation für verschiedene über die Phasensteuerung(en) eingestellte Richtcharakteristiken der Gruppenantenne(n) durchgeführt werden, wobei jeder Pfad des Mehrwegesystems mit den unterschiedlichen Richtcharakteristiken verschieden stark gewichtet wird. Die Übertragungsfunktion ist daher eine Funktion von Frequenz, Sendepolarisation und Richtcharakteristik, wobei die möglichen obig erläuterten Probleme bzw. ungünstigen Verläufe von Betrag und Phase mit der Sendepolarisation und der Richtcharakteristik variieren. Die durch die Erweiterung des erfindungsgemäßen Verfahrens eingeführte Messreihe mit unterschiedlichen Sendepolarisationen und unterschiedlichen Richtcharakteristiken verringert daher den Einfluss etwaiger ungünstiger Betrags-/Phasenverläufe noch stärker als das erfindungsgemäße Verfahren ohne zusätzlicher Betrachtung der Richtcharakteristiken. Der Grund dafür ist, dass die Betrachtung der einzelnen Reflektoren bei Veränderung der Richtcharakteristik variiert, wodurch ungünstige Phasenverläufe, welche zu Messfehlern führen, erkannt werden, wodurch diese ungünstigen Phasenverläufen aus der Berechnung ausgeschlossen werden können.

Darüber hinaus weist die erfindungsgemäße Vorrichtung in einer bevorzugten Ausführungsform zumindest einen Tiefpassfilter zur Filterung des zumindest einen zu erhaltenden Empfangssignals auf.

In einer weiteren bevorzugten Ausführungsform weist die Vorrichtung ein 3x3 Antennenarray als steuerbare Antenne auf, wobei acht Randelemente des 3x3 Antennenarrays als eine Sendeantenne und ein mittleres Element als eine Empfängerantenne ausgebildet sind, wobei das mittlere Element mit einem Polarisationsumschalter verbunden ist.

KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Dabei zeigt:

Fig. 1    ein Lesegerät mit einer Einzelantenne zum Senden und Empfangen,

Fig. 2    ein Auswerteverfahren für ein Lesegerät mit einer Einzelantenne,

Fig. 3    ein Lesegerät mit einer Gruppenantenne im Sendepfad,

Fig. 4    ein Auswerteverfahren für ein Lesegerät mit einer Gruppenantenne im Sendepfad,

Fig. 5    eine HF-Anwendung (Hochfrequenz-Anwendung) mit getrennter Sende- und Empfangsantenne,

Fig. 6    eine HF-Anwendung (Hochfrequenz-Anwendung) mit Einzelantenne und

Fig. 7    eine HF-Anwendung (Hochfrequenz-Anwendung) mit steuerbarer Sendeantenne.

WEGE ZUR AUSFÜHRUNG DER ERFINDUNG

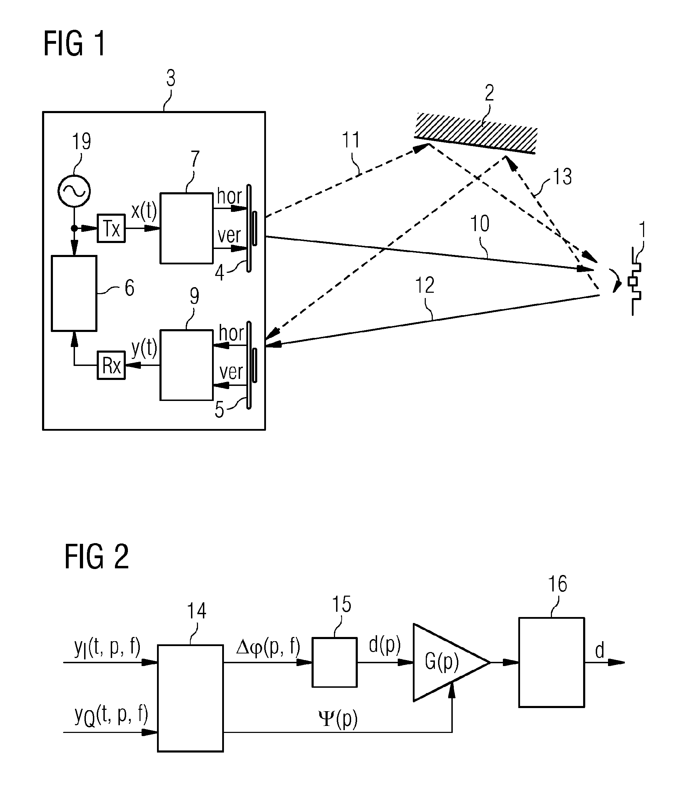

Fig. 1 zeigt eine Vorrichtung in Form eines Lesegeräts 3 zur schmalbandigen Messung der Entfernung d zu einem Transponder 1, wobei die Vorrichtung zumindest eine Sendeantenne 4 zum Aussenden eines Sendesignals 10,11 mit zumindest zwei unterschiedlichen Sendepolarisationen $p$ und zumindest eine Empfangsantenne 5 zur Detektion eines polarisierten Empfangssignals 12,13 umfasst. Es ist deutlich ersichtlich wie die Sendesignale 10,11 entweder über einen direkten Tx-Pfad oder indirekt über einen Reflektor 2 über einen Tx-Reflektionspfad auf den Transponder 1 treffen und von diesem direkt über einen Rx-Pfad 12 oder indirekt über einen Reflektor 2 über einen Rx-Reflektionspfad 13 zurückgesendet werden.

Dabei ist eine Auswerteeinheit 6 zur Auswertung von Sende-10,11 und Empfangssignalen 12,13 innerhalb eines Lesegeräts 3 vorgesehen, mit welcher eine Phasenverschiebung $\Delta\varphi$ zwischen einem Sendesignal 10,11 und einem nach einer Reflektion an einem Transponder 1 erhaltenen Empfangssignal 12,13 mit messtechnisch bestimmter Polarisation gemessen werden kann, wobei N schmalbandige Einzelmessungen mit N unterschiedlichen Sendepolarisationen $p$ zur Bestimmung der Phasenverschiebung $\Delta\varphi(p,f)$ für jede Sendepolarisation $p$ zwischen Sende- 10,11 und Empfangssignal 12,13 bei mindestens zwei verschiedenen Frequenzen $f_1, f_2$ (oder allgemeiner für mehr als zwei Frequenzen $f_i, f_j$) des schmalbandigen Frequenzbandes durchgeführt werden können und die Entfernung d(p) mit Hilfe einer aus der Phasenverschiebung $\Delta\varphi(p,f)$ bestimmten Signallaufzeit $\tau\varphi(p)$ und der Signalgeschwindigkeit c für jede der N unterschiedlichen Sendepolarisationen $p$ berechnet werden kann, wobei eine Mittelung der einzelnen Entfernungen $d(p,f_i,f_j)$, hier $d(p,f_1,f_2)$, die zu messenden Entfernung $d$ ergibt.

Dabei weist die erfindungsgemäße Vorrichtung einen Oszillator 19 zur Signalerzeugung für eine Polarisationssteuerung 7 auf, welche an die Sendeantenne 4 mit zumindest einem Vertikal-(ver) und/oder zumindest einem Horizontaleingang (hor) angeschlossen ist, und eine mit der Empfangsantenne 5 mit zumindest einem Vertikal- (ver) und/oder zumindest einem Horizontalausgang (hor) verbundene Umschalteinheit 9.

Bei dem in Fig. 2 dargestellten zugehörigen Verfahren wird eine Phasenverschiebung $\Delta\varphi$ zwischen dem Sendesignal 10,11 und dem nach der Reflektion an einem Transponder 1 erhaltenen Empfangssignal 12,13 mit messtechnisch bestimmter Polarisation gemessen, wobei $N$ schmalbandige Einzelmessungen mit N unterschiedlichen Sendepolarisationen $p$ zur Bestimmung der Phasenverschiebung $\Delta\varphi(p,f)$ für jede Sendepolarisation $p$ zwischen Sende- (10,11) und Empfangssignal 12,13 mit einer Phasen-, Leistungs- und Polarisationsmesseinheit 14 bei mindestens zwei verschiedenen Frequenzen $f_1, f_2$ des schmalbandigen Frequenzbandes durchgeführt werden und die mit einer Abstandsberechnungseinheit 15 ermittelte Entfernung $d(p,f_i,f_j)$, hier *also z.B.* $d(p,f_1,f_2)$, mit Hilfe einer aus der Phasenverschiebung $\Delta\varphi(p,f)$ bestimmten Signallaufzeit $\tau_\varphi(p,f_i,f_j)$, hier *also* $\tau_\varphi(p,f_1,f_2)$, und der Signalgeschwindigkeit c für jede der $N$ unterschiedlichen Sendepolarisationen $p$ und jede der möglichen Frequenzkombinationen $f_i, f_j$ berechnet wird, wobei eine Mittelung der einzelnen Entfernungen $d(p,f_i,f_j)$ die zu messende Entfernung d ergibt:

$$d(p) = c\ \tau_\varphi(p)/2 =$$
$$c\ [\Delta\varphi(p,f_2) - \Delta\varphi(p,f_1)]\ /\ [4\pi\ (f_2-f_1)]. \tag{1}$$

Dabei wird in einer bevorzugten Ausführungsform für jede Entfernungsmessung $d(p,f_i,f_j)$ das Signal an zumindest einem Vertikal- (ver) und/oder zumindest einem Horizontalausgang (hor) der Empfangsantenne 5 verwendet, wobei die tatsächliche bzw. endgültige Entfernung d mit Hilfe einer Gewichtungsfunktion $G(p,f)$ der N Entfernungsmessungen ermittelt wird, wobei als Gewichtungsfunktion verschiedene bevorzugte Alternativen zur Verfügung stehen:

.) Die Gewichtungsfunktion $G(p,f)$ ist von einer Empfangsleistung, welche aufgrund einer eingestellten Sendepolarisation p erzielt wird, abhängig.
.) Die Gewichtungsfunktion $G(p,f)$ ist von der Übereinstimmung eines messtechnisch ermittelten Empfangspolarisationsmodus und eines von dem Transponder 1 erwarteten Polarisationsmodus abhängig.

Im Falle, dass mehr als zwei Frequenzen $f_i,f_j$ gemessen werden, so kann für jedes der K Frequenzpaare bei jeder Sendepolarisation p ein Wert für die Entfernung $d(p)$ ermittelt werden. Dabei wird in einer bevorzugten Ausführungsform die tatsächliche bzw. endgültige Entfernung d durch Mittelung und Gewichtung mit Hilfe einer Gewichtungsfunktion $G(p,f)$ der K Entfernungsmessungen für jede der N Sendepolarisationen p bestimmt, wobei nachfolgende Alternativen zur Berechnung der Gewichtungsfunktion $G(p,f)$ zur Verfügung stehen:

.) Die Gewichtungsfunktion $G(p,f)$ ist von einer Übereinstimmung der Empfangsleistung, welche aufgrund der eingestellten K Sendefrequenzen erzielt wird, abhängig.
.) Die Gewichtungsfunktion $G(p,f)$ ist von der Übereinstimmung des messtechnisch ermittelten Empfangspolarisationsmodus, der aufgrund der eingestellten K Sendefrequenzen erzielt wird, abhängig.
.) Die Gewichtungsfunktion $G(p,f)$ ist von einer Übereinstimmung des messtechnisch ermittelten Entfernungswertes d, der aufgrund der eingestellten K Sendefrequenzen erzielt wird, abhängig.

Dabei können die Gewichtungsfunktionen $G(p,f)$ für den Standardfall und für den Fall, dass mehr als zwei Frequenzen gemessen werden, zusätzlich gemäß nachfolgenden Schritten ermittelt werden:

.) Die Gewichtungsfunktion $G(p,f)$ resultiert aus einer Kombination der obig erläuterten Gewichtungsfunktionen $G(p)$.
.) Die Gewichtungsfunktion $G(p,f)$ ist gleich 1 für alle Sendepolarisationen p, wodurch eine einfache Mittelung stattfindet.

Dabei repräsentiert die Größe $\Psi(p)$ die Ausgangswerte, welche aufgrund des gewählten Bewertungskriteriums oder der gewählten Kombination aus Bewertungskriterien berechnet werden. $\Psi(p)$ wird dabei aus den erfassten Messdaten für Betrag, Phase und Polarisationsmodus des Empfangssignals 12,13 gewonnen und wird zur Gewichtung der einzelnen Entfernungsmessungen $d(p)$ zur Mittelwertbildung verwendet.

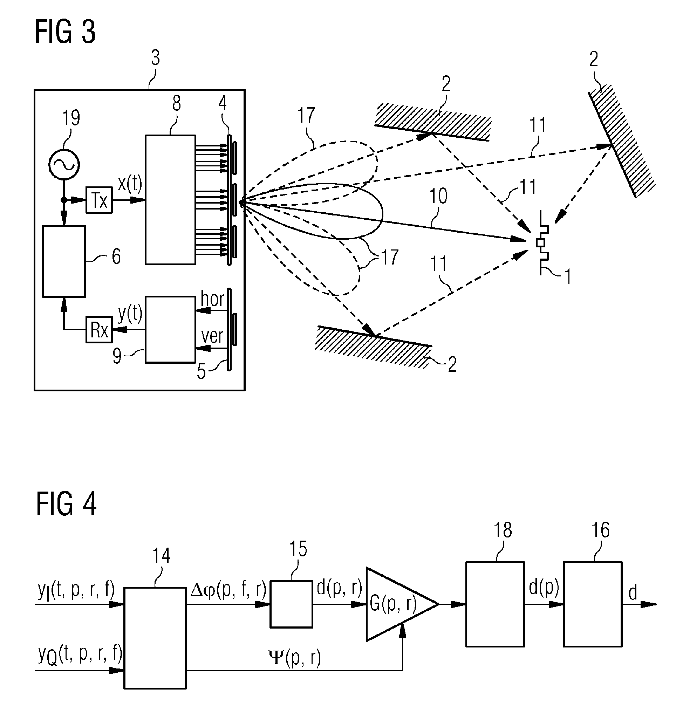

In Fig. 3 ist eine zweite Variante des Lesegeräts 3 dargestellt, bei der das Lesegeräts 3 ferner eine Polarisations- und Phasensteuerung 8 mit einer steuerbaren Richtcharakteristik 17 zur Erstellung M verschiedener Richtcharakteristiken r umfasst.

Dabei handelt es sich bei der Sendeantenne 4 um eine phasengesteuerte Gruppenantenne, bei welcher M verschiedene Richtcharakteristiken r eingestellt werden, wobei gemäß dem in Fig. 4 dargestellten Auswerteverfahren $N*M$ schmalbandige Einzelmessungen für N unterschiedliche Sendepolarisationen p und M Richtcharakteristiken r durchgeführt werden und für jede der M Richtcharakteristiken r und für jede der N Sendepolarisationen p die Phasenverschiebung $\Delta\varphi(p,f,r)$ zwischen Sende- 10,11 und Empfangssignal 12,13 bei mindestens zwei verschiedenen Frequenzen $f_1,f_2$ (oder allgemeiner für mehr als zwei Frequenzen $f_i,f_j$) des schmalbandigen Frequenzbandes bestimmt wird und die Entfernung $d(p,r)$ mit Hilfe einer aus den Phasenverschiebungen $\Delta\varphi(p,f,r)$ bestimmten Signalaufzeit $\tau_\varphi(p,r,f_i,f_j)$ und der Signalgeschwindigkeit c für jede der $N*M$ unterschiedlichen Sendepolarisations- und Richtcharakteristik-Tupel berechnet wird, wobei vor Mittelung über N unterschiedliche Sendepolarisationen p mit einer Mittelungseinheit 16 eine Auswahl aus oder Mittelung über M verschiedene Richtcharakteristiken r mit einer Mittelungseinheit 18 durchgeführt wird, indem aus den $N*M$ Entfernungen $d(p,r,f_i,f_j)$ N Entfernungen $d(p,f_i,f_j)$ ermittelt werden, wobei zur Ermittlung der Entfernung für jede Sendepolarisation p die mit den M Richtcharakteristiken r ermittelten Entfernungen $d(p,r,f_i,f_j)$ gemittelt werden:

$$d(p,r) = c \; \tau_\varphi(p,r) \; / \; 2 =$$

$$-c \; [\Delta\varphi(p,f_2,r) - \Delta\varphi(p, f_1,r)] \; / \; [4\pi \; (f_2-f_1)]. \qquad (2)$$

Hierbei werden aus den $N*M$ Entfernungsmessungen $N$ Entfernungsmessungen ermittelt, wobei für jede Sendepolarisation die mit den $M$ Richtcharakteristiken r ermittelten Entfernungsmessungen gemittelt und vorzugsweise auch mit einer Gewichtungsfunktion $G(p,r)$ gewichtet werden, wobei verschiedene Alternativen zur Verfügung stehen:

.) Die Gewichtungsfunktion $G(p,f,r)$ ist von einer Empfangsleistung, welche aufgrund einer eingestellten Sendepolarisation $p$ erzielt wird, und der Richtcharakteristik r abhängig.

.) Die Gewichtungsfunktion $G(p,f,r)$ ist von einer Übereinstimmung eines messtechnisch ermittelten Empfangspolarisationsmodus und eines von dem Transponder 1 erwarteten Polarisationsmodus abhängig.

.) Die Gewichtungsfunktion $G(p,r)$ resultiert aus einer Kombination der obig erläuterten Gewichtungsfunktionen $G(p,r).$

.) Die Gewichtungsfunktion $G(p,f,r)$ ist gleich 1 bei einer maximalen Empfangsleistung für die Sendepolarisation $p$ und die Richtcharakteristik $r.$

Hierbei wird in einer bevorzugten Ausführungsform aus $M$ verschiedenen Richtcharakteristiken r nur ein leistungsstärkstes Signal der Empfangsantenne 5 verwendet.

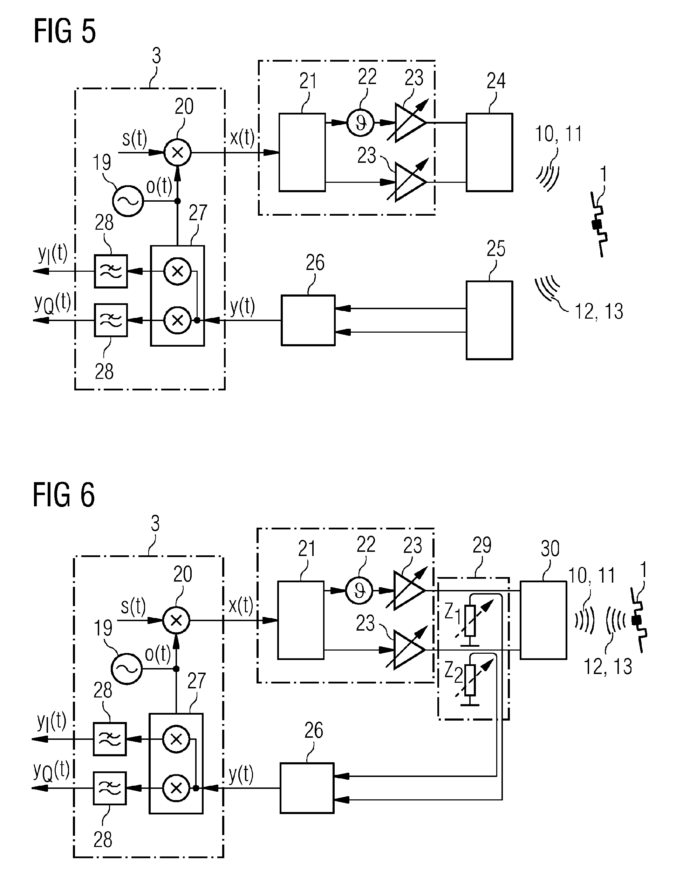

Fig. 5 zeigt eine Hochfrequenz-Anwendung der Erfindung mit getrennter Sende- 4 und Empfangsantenne 5. Die Vorrichtung weist die notwendigen Komponenten auf, die zusätzlich zu einem handelsüblichen integrierten Lesegerät 3 benötigt werden. Die Sendepolarisation $p$ kann mit einem Phasenschieber 22 und zwei gesteuerten Verstärkern 23 eingestellt werden. Zwei kreuzpolarisierte Antennen 24,25 mit getrennten Ausgängen für horizontale und vertikale Polarisation werden benötigt. Die kreuzpolarisierte Sender-Antenne 24 strahlt das Sendesignal 10,11 zum Betrieb der/des Transponder(s) 1 ab. Die kreuzpolarisierte Empfänger-Antenne 25 empfängt das rückgestreute Signal 12,13 vom Transponder 1. Der Polarisationsumschalter 26 wählt entweder die horizontale oder die vertikale Komponente des Empfangssignals 12,13 aus.

Darüber hinaus ist ein Leistungsteiler 21 zur phasengleichen Aufteilung des Sendesignals 10,11 vorgesehen. Ein zugehöriger Modulator 20 dient zur Modulation des Sendesignals 10,11 während der Datenübertragung vom Lesegerät 3 zum Transponder 1. Ein dabei auftretendes Modulationssignal $s(t)$ ist konstant während der Messphase, in der der Transponder 1 antwortet, wobei das Lesegerät 3 dann ein unmoduliertes Sinussignal abstrahlt.

Eine Lösung mit nur einer einzigen kreuzpolarisierten Antenne 30 ist in Fig. 6 dargestellt. Anstelle der zweiten Antenne werden zwei Richtkoppler 29 vor die kreuzpolarisierte Antenne 30 geschaltet, die das vom Transponder 1 rückgestreute Signal 12,13 vom Sendesignal 10,11 trennen. Die Richtkoppler 29 können abstimmbar ausgeführt werden, um eine besonders hohe Unterdrückung des in dem Empfänger übersprechenden Sendesignals 10,11 zu erreichen, wobei die Abstimmung der Richtkoppler 29 unter Verwendung der DC-Anteile in den I/Q Empfangssignalen $y_I(t)$ und $y_Q(t)$ und eines einfachen Regelalgorithmus vorgenommen werden kann. Üblicherweise wird hier als Regelalgorithmus ein gradientenbasiertes Verfahren (Gradientenverfahren) oder ein Minimum-Suchverfahren verwendet. Die Regelalgorithmen variieren dabei die Steuereingänge der Richtkoppler, damit die DC-Anteile in den Empfangssignalen 12,13 minimiert werden, was jeweils separat über den aktiven horizontalen oder vertikalen Kanal geschehen kann. Dabei arbeitet die Regelung deutlich unter den typischen Taktzeiten der Kommunikation mit dem Transponder 1, damit die Regelung nicht von der Transponderkommunikation gestört wird.

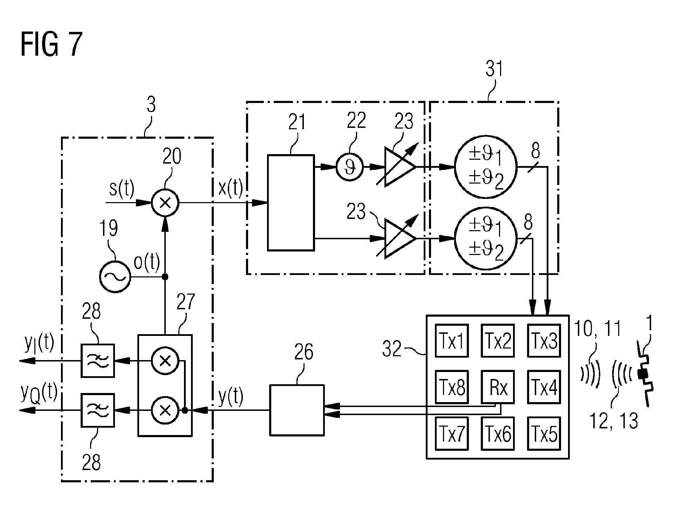

Der Realisierungsvorschlag in Fig. 7 zeigt eine mögliche Ausführungsform einer in der Richtcharakteristik steuerbaren Antenne. Dazu wird ein planares 3x3 Antennenarray 32 verwendet, bei dem die acht Randelemente des 3x3 Antennenarrays 32 als eine Sendeantenne und das mittlere Element als eine Empfängerantenne verwendet werden. Mit geeigneten steuerbaren Phasenschiebern 22 vor den Randelementen kann die Richtung in die der Großteil der Sendeleistung abgestrahlt wird eingestellt werden, wobei das mittlere Element mit einem Polarisationsumschalter 26 verbunden ist. Mit Hilfe eines Abstrahlwinkel-Phasenverschiebers 31 werden dabei die Phasenunterschiede benachbarter Elemente der Sendeantenne so gesteuert, dass die Überlagerung abgestrahlter Signale der einzelnen Elemente im gewünschten Entfernungsbereich und in einem gewünschten Abstrahlwinkel ein Maximum an Feldstärke ergibt. Die benötigten Phasenunterschiede hängen von einem gewünschten Abstrahlwinkel (Azimuth und Elevation), der Frequenz und der Lage der einzelnen Elemente zueinander ab und können mit Hilfe unterschiedlicher, bekannter Verfahren ermittelt werden.

Dabei ist bei allen obig erläuterten HF-Anwendungen ausgangsseitig an der Umschalteinheit 9 bzw. dem Abwärtswandler 27 zumindest ein Tiefpassfilter 28 zur Filterung des zumindest einen zu erhaltenden Empfangssignal 12,13 bzw. der Empfangssignale $y_I(t)$ und $y_Q(t)$ angeordnet.

Bezugszeichenliste:

1 Transponder;
2 Reflektor;
3 Lesegerät;
4 Sendeantenne;
5 Empfangsantenne;
6 Auswertungseinheit;
7 Polarisationssteuerung;
8 Polarisations- und Phasensteuerung;
9 Umschalteinheit (hor/ver);
10 direkter Tx-Pfad eines Sendesignals;
11 Tx-Reflektionspfad eines Sendesignals;
12 direkter Rx-Pfad eines Empfangssignals;
13 Rx-Reflektionspfad eines Empfangssignals;
14 Phasen-, Leistungs- und Polarisationsmesseinheit;
15 Abstandberechnungseinheit;
16 Mittelungseinheit für N Sendepolarisationen;
17 steuerbare Richtcharakteristik;
18 Mittelungseinheit für M Senderichtungen;
19 Oszillator;
20 Modulator;
21 Leistungsteiler;
22 Phasenschieber;
23 gesteuerter Verstärker;
24 kreuzpolarisierte Sender-Antenne;
25 kreuzpolarisierte Empfänger-Antenne;
26 Polarisationsumschalter;
27 Abwärtswandler;
28 Tiefpassfilter;
29 Tx/Rx Richtkoppler;
30 kreuzpolarisierte Antenne;
31 Abstrahlwinkel-Phasenverschieber;
32 3x3 Antennenarray;

**Patentansprüche**

1. Verfahren zur schmalbandigen Messung einer Entfernung (d) zu einem Transponder (1), wobei zumindest eine Sendeantenne (4), bei welcher zumindest zwei unterschiedliche Sendepolarisationen ($p$) eingestellt werden können, und zumindest eine Empfangsantenne (5), welche unterschiedliche Polarisationen erkennen kann, verwendet werden, **dadurch gekennzeichnet, dass** eine Phasenverschiebung ($\Delta\varphi$) zwischen einem Sendesignal (10,11) und einem nach einer modulierten Reflektion an einem Transponder (1) erhaltenen Empfangssignal (12,13) mit messtechnisch bestimmter Polarisation gemessen wird, wobei N schmalbandige Einzelmessungen mit N unterschiedlichen Sendepolarisationen ($p$) zur Bestimmung der Phasenverschiebung ($\Delta\varphi(p,f)$) für jede Sendepolarisation ($p$) zwischen Sende- (10,11) und Empfangssignal (12,13) bei mindestens zwei verschiedenen Frequenzen ($f_i,f_j$) des schmalbandigen Frequenzbandes durchgeführt werden und die Entfernung ($d(p,f_i,f_j)$) mit Hilfe einer aus der Phasenverschiebung ($\Delta\varphi(p,f)$) bestimmten Signallaufzeit ($\tau_\varphi(p,f_i,f_j)$) und der Signalgeschwindigkeit (c) für jede der N unterschiedlichen Sendepolarisationen ($p$) und jeder der möglichen Frequenzkombinationen ($f_i,f_j$) berechnet wird, wobei eine Mittelung der einzelnen Entfernungen (d $(p,f_i,f_j)$) die zu messende Entfernung (d) ergibt.

2. Verfahren nach Anspruch 1, **dadurch gekennzeichnet, dass** für jede Entfernungsmessung ($d(p,f_i,f_j)$) das Signal an zumindest einem Vertikal- (ver) und/oder zumindest einem Horizontalausgang (hor) der Empfangsantenne (5) verwendet wird.

3. Verfahren nach Anspruch 1 oder 2, **dadurch gekennzeichnet, dass** die Sende- (4) und/oder die Empfangsantenne (5) ferner phasengesteuerte Gruppenantennen sind, bei welchen $M$ verschiedene Richtcharakteristiken (r) eingestellt werden, wobei $N*M$ schmalbandige Einzelmessungen für $N$ unterschiedliche Sendepolarisationen ($p$) und $M$ Richtcharakteristiken (r) durchgeführt werden und für jede der $M$ Richtcharakteristiken (r) und für jede der $N$ Sendepolarisationen ($p$) die Phasenverschiebung ($\Delta\varphi(p,f,r)$) zwischen Sende- (10,11) und Empfangssignal (12,13) bei mindestens zwei verschiedenen Frequenzen ($f_1,f_2,f_i,f_j$) des schmalbandigen Frequenzbandes bestimmt wird und die Entfernung ($d(p,r,f_i,f_j)$) mit Hilfe einer aus den Phasenverschiebungen ($\Delta\varphi(p,f,r)$) bestimmten Signallaufzeit ($\tau_\varphi(p,r,f_i,f_j)$) und der Signalgeschwindigkeit (c) für jede der $N*M$ unterschiedlichen Sendepolarisations- und Richtcharakteristik-Tupel berechnet wird, wobei vor Mittelung über $N$ unterschiedliche Sendepolarisationen ($p$) eine Auswahl aus oder Mittelung über $M$ verschiedene Richtcharakteristiken (r) durchgeführt wird, indem aus den $N*M$ Entfernungen ($d(p,r,f_i,f_j)$) $N$ Entfernungen ($d(p,f_i,f_j)$) ermittelt werden, wobei zur Ermittlung der Entfernung für jede Sendepolarisation ($p$) die mit den $M$ Richtcharakteristiken (r) ermittelten Entfernungen ($d(p,r,f_i,f_j)$) gemittelt werden.

4. Verfahren nach einem der Ansprüche 1 bis 3, **dadurch gekennzeichnet, dass** ferner eine Gewichtung der $N$ Entfernungsmessungen ($d(p,f_i,f_j)$ ,$d(p,r,f_i,f_j)$) mit einer Gewichtungsfunktion ($G(p,f),G(p,f,r)$) durchgeführt wird.

5. Verfahren nach Anspruch 4, **dadurch gekennzeichnet, dass** die Gewichtungsfunktion ($G(p,f)$) von einer Empfangsleistung, welche aufgrund einer eingestellten Sendepolarisation ($p$) erzielt wird, abhängig ist.

6. Verfahren nach Anspruch 4 oder 5, **dadurch gekennzeichnet, dass** die Gewichtungsfunktion ($G(p,f)$) von einer Übereinstimmung eines messtechnisch ermittelten Empfangspolarisationsmodus und eines von dem Transponder (1) erwarteten Polarisationsmodus abhängig ist.

7. Verfahren nach Anspruch 4, **dadurch gekennzeichnet, dass** die Gewichtungsfunktion ($G(p,f)$) gleich 1 für alle Sendepolarisationen ($p$) ist.

8. Verfahren nach Anspruch 4, **dadurch gekennzeichnet, dass** die Gewichtungsfunktion ($G(p,f,r)$) von einer Empfangsleistung, welche aufgrund einer eingestellten Sendepolarisation ($p$) erzielt wird, und der Richtcharakteristik (r) abhängig ist.

9. Verfahren nach Anspruch 4 oder 8, **dadurch gekennzeichnet, dass** die Gewichtungsfunktion ($G(p,f,r)$) von einer Übereinstimmung eines messtechnisch ermittelten Empfangspolarisationsmodus und eines von dem Transponder (1) erwarteten Polarisationsmodus abhängig ist.

10. Verfahren nach Anspruch 4, **dadurch gekennzeichnet, dass** die Gewichtungsfunktion ($G(p,f,r)$) gleich 1 bei einer maximalen Empfangsleistung für die Sendepolarisation ($p$) und die Richtcharakteristik (r) ist.

11. Verfahren nach einem der Ansprüche 1 bis 10, **dadurch gekennzeichnet, dass** aus $M$ verschiedenen Richtcharakteristiken (r) nur ein leistungsstärkstes Signal der Empfangsantenne (5) verwendet wird.

12. Vorrichtung zur schmalbandigen Messung der Entfernung (d) zu einem Transponder (1) zur Durchführung eines Verfahrens nach einem der Ansprüche 1 bis 11, umfassend zumindest eine Sendeantenne (4), bei welcher zumindest zwei unterschiedliche Sendepolarisationen ($p$) einstellbar sind, zum Aussenden eines Sendesignals (10,11) und zumindest eine Empfangsantenne (5) zur Detektion eines polarisierten Empfangssignals (12,13), **dadurch gekennzeichnet, dass** eine Auswerteeinheit (6) zur Auswertung von Sende- (10,11) und Empfangssignalen (12,13) vorgesehen ist, mit welcher eine Phasenverschiebung ($\Delta\varphi$) zwischen einem Sendesignal (10,11) und einem nach einer Reflektion an einem Transponder (1) erhaltenen Empfangssignal (12,13) mit messtechnisch bestimmter Polarisation gemessen werden kann, wobei N schmalbandige Einzelmessungen mit N unterschiedlichen Sendepolarisationen ($p$) zur Bestimmung der Phasenverschiebung ($\Delta\varphi(p,f)$) für jede Sendepolarisation ($p$) zwischen Sende- (10,11) und Empfangssignal (12,13) bei mindestens zwei verschiedenen Frequenzen ($f_i,f_j$) des schmalbandigen Frequenzbandes durchgeführt werden können und die Entfernung ($d(p,f_i,f_j)$) mit Hilfe einer aus der Phasenverschiebung ($\Delta\varphi(p,f)$) bestimmten Signallaufzeit ($\tau_\varphi(p,f_i,f_j)$) und der Signalgeschwindigkeit (c) für jede der $N$ unterschiedlichen Sendepolarisationen ($p$) berechnet werden kann, wobei eine Mittelung der einzelnen Entfernungen ($d(p,f_i,f_j)$) die zu messenden Entfernung (d) ergibt.

13. Vorrichtung nach Anspruch 12, **dadurch gekennzeichnet, dass** die Vorrichtung ferner eine Polarisations- und Phasensteuerung (8) zur Erstellung $M$ verschiedener Richtcharakteristiken (r) umfasst.

14. Vorrichtung nach einem der Ansprüche 12 bis 13, **dadurch gekennzeichnet, dass** zumindest ein Tiefpassfilter (28) zur Filterung des zumindest einen zu erhaltenden Empfangssignals (12,13) angeordnet ist.

15. Vorrichtung nach einem der Ansprüche 12 bis 14, **dadurch gekennzeichnet, dass** die Vorrichtung ein 3x3 Antennenarray (32) als steuerbare Antenne umfasst, wobei acht Randelemente des 3x3 Antennenarrays (32) als eine Sendeantenne und ein mittleres Element als eine Empfängerantenne ausgebildet sind, wobei das mittlere Element mit einem Polarisationsumschalter (26) verbunden ist.

FIG 1

FIG 2

## FIG 3

## FIG 4

## FIG 5

## FIG 6

# FIG 7

Europäisches
Patentamt

European
Patent Office

Office européen
des brevets

**EUROPÄISCHER RECHERCHENBERICHT**

Nummer der Anmeldung

EP 14 17 2263

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/052857 A1 (OZEKI TAKEO [JP] ET AL) 4. März 2010 (2010-03-04) | 1,2,4-7, 9,10,12, 14 | INV. G01S7/025 G01S13/84 |
| Y | * das ganze Dokument * | 3,8,11, 13,15 | |
| | ----- | | |
| X | US 2013/201003 A1 (SABESAN SITHAMPARANATHAN [GB] ET AL) 8. August 2013 (2013-08-08) | 1,2,4-7, 9,10,12, 14 | |
| Y | * Zusammenfassung * | 3,8,11, 13,15 | |
| | ----- | | |
| X | FR 2 965 634 A1 (COMMISSARIAT ENERGIE ATOMIQUE [FR]) 6. April 2012 (2012-04-06) | 1,2,4-7, 9,10,12, 14 | |
| Y | * das ganze Dokument * | 3,8,11, 13,15 | |
| | ----- | | |
| X | US 2007/241904 A1 (OZAKI TOMOHIRO [JP] ET AL) 18. Oktober 2007 (2007-10-18) | 1-7,9, 10,12-15 | |
| Y | * Absatz [0091] - Absatz [0103]; Absatz [0112] - Absatz [0113]; Absatz [0013] - Absatz [0019]; Abbildungen 6a, 15 * | 8,11 | RECHERCHIERTE SACHGEBIETE (IPC) G01S |
| | ----- | | |
| X | FR 2 965 635 A1 (COMMISSARIAT ENERGIE ATOMIQUE [FR]) 6. April 2012 (2012-04-06) | 1,2,4-7, 9,10,12, 14 | |
| Y | * Zusammenfassung; Abbildungen 1,3D * | 3,8,11, 13,15 | |
| | ----- | | |
| Y | US 2008/012710 A1 (SADR RAMIN [US]) 17. Januar 2008 (2008-01-17) | 3,8,11, 13,15 | |
| A | * Absatz [0008] - Absatz [0019]; Abbildungen 2, 12 * | 1,2,4-7, 9,12,14 | |
| | ----- | | |

Der vorliegende Recherchenbericht wurde für alle Patentansprüche erstellt

| Recherchenort | Abschlußdatum der Recherche | Prüfer |
|---|---|---|
| München | 27. November 2014 | Rudolf, Hans |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 14 17 2263

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2014

| Im Recherchenbericht angeführtes Patentdokument | Datum der Veröffentlichung | Mitglied(er) der Patentfamilie | Datum der Veröffentlichung |
|---|---|---|---|
| US 2010052857 A1 | 04-03-2010 | KEINE | |
| US 2013201003 A1 | 08-08-2013 | EP 2564229 A2<br>US 2013201003 A1<br>WO 2011135328 A2 | 06-03-2013<br>08-08-2013<br>03-11-2011 |
| FR 2965634 A1 | 06-04-2012 | KEINE | |
| US 2007241904 A1 | 18-10-2007 | KEINE | |
| FR 2965635 A1 | 06-04-2012 | KEINE | |
| US 2008012710 A1 | 17-01-2008 | US 2008012710 A1<br>US 2011090059 A1<br>US 2014292492 A1 | 17-01-2008<br>21-04-2011<br>02-10-2014 |

EPO FORM P0461

Für nähere Einzelheiten zu diesem Anhang : siehe Amtsblatt des Europäischen Patentamts, Nr.12/82